# EUROPEAN PATENT APPLICATION

(11) **EP 1 739 330 A1**
(43) Date of publication of application: **03.01.2007**
(21) Application number: 06008932.3
(22) Date of filing: 28.04.2006
(51) Int. Cl.: F16J 15/08, F16J 15/12

(54) **Insertable carrier for multiple piece gasket designs that limit compression**

(30) Priority: 27.06.2005 US 167461
(71) Applicant: Carl Freudenberg KG, 69469 Weinheim (DE)
(72) Inventor: Berdichevsky, Alexander, Farmington Hills MI 48331 (US)

(57) **Abstract**

A gasket is provided which includes a first carrier (12), a second carrier (14), and a sealing member (16). The first carrier (12) includes a body having at least one aperture (18) defined therein. The second carrier (14) is disposed along at least a portion of the inner perimeter (22) of the aperture (18) in the first carrier (12). The sealing member (16) is disposed along at least a portion of the inner perimeter of the second carrier (14).

## Description

### FIELD OF THE INVENTION

The present invention relates to gaskets, and more specifically to multiple piece gaskets.

### BACKGROUND OF THE INVENTION

Gaskets typically include a carrier having an elastomeric sealing member formed thereon. Typically, a single carrier comprises the body of the gasket. This carrier may be formed from a variety of materials. When the carrier is formed from a polymer and the sealing member is coupled to this polymer, degradation of the attachment between the sealing member and the carrier can occur over time. This is due to a difficulty in establishing a good bond between the two structures. A metal carrier may be used to remedy this problem, thereby increasing the bond between the structures. However, this results in a higher part cost as well as potential weight issues. As a result, there exists a need in the art for an improved gasket assembly.

### SUMMARY OF THE INVENTION

A gasket is provided which includes a first carrier, a second carrier, and a sealing member. The first carrier includes a body having at least one aperture defined therein. The second carrier is disposed along at least a portion of the inner perimeter of the aperture in the first carrier. The sealing member is disposed along at least a portion of the inner perimeter of the second carrier. Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a perspective view of a gasket assembly according to the teachings of the present invention;
Figure 2 is a perspective view of the second carrier and the seal member of Figure 1; and
Figure 3 is a cross-sectional view of a portion of the gasket assembly of Figure 1.

### DETAILED DESCRIPTION OF THE PREFERRED EMBODIMENTS

The following description of the preferred embodiment(s) is merely exemplary in nature and is in no way intended to limit the invention, its application, or uses.

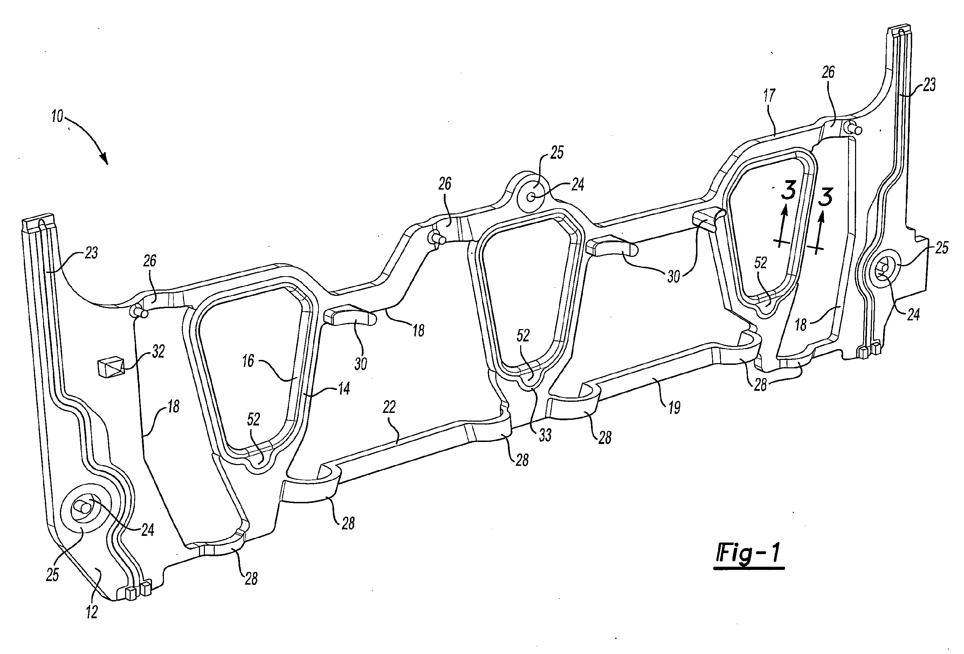

Referring to the drawings, Figure 1 shows a gasket assembly 10. The gasket assembly 10 can include a first carrier 12, a second carrier 14, and a sealing member 16.

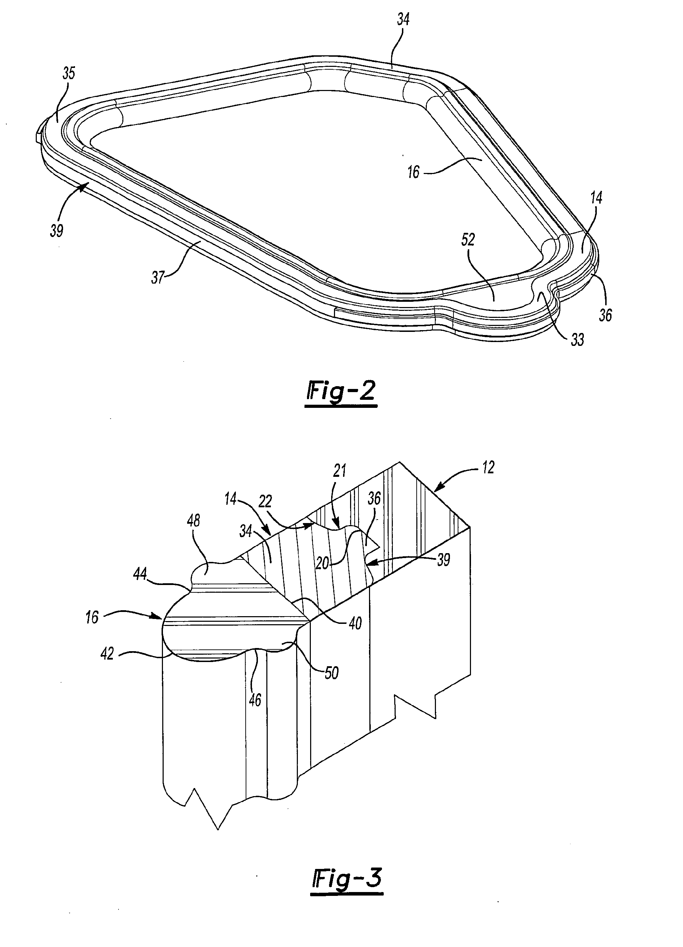

The first carrier 12 may have substantially flat upper and lower surfaces 17, 19 and a first plurality of apertures 18 formed therein. The upper and lower surfaces 17, 19 may include a plurality of sealing beads 23 formed thereon. The apertures 18 include a sidewall 21 which may include a central recess 20 extending along an inner perimeter 22 as shown in Figure 3. While shown only extending along a portion of the inner perimeter 22, it should be understood that the central recess 20 could extend along the entire inner perimeter 22. A second plurality of apertures 24 may be located within the first carrier 12 for fastening the gasket assembly 10 between sealing surfaces. The second plurality of apertures 24 may also include a load limiter 25 disposed therein. This load limiter 25 may be formed similarly to the second carrier 14 or may be formed from a different material and/or process. The first carrier 12 includes features 26, 28 that provide clearances for a push rod assembly which passes through the plane of the gasket. In addition, a push rod guide 30 is provided to help hold the push rod during assembly until an operator can tighten the rocker arm bolt which then moves the push rod off of the gasket surface. The gasket assembly 10 may be positioned on a sealing surface through the use of locating features 32. The locating features 32 allow for proper positioning of the gasket assembly 10 between sealing surfaces before assembly.

The first carrier 12 may be formed from a variety of materials ranging from polymers to metals to ceramics. The present example shows the carrier 12 formed from a plastic. This allows for features such as the locating features 32 to be integrally formed thereon. The use of plastic for the main carrier also allows for a less expensive and lower weight part.

With additional reference to Figure 2, the second carrier 14 may have a shape generally conforming to the shape of one of the apertures 18, or a portion thereof, in the first carrier 12. The thickness of the second carrier 14 may also be substantially similar to that of the first carrier 12. The second carrier 14 may include a main body portion 34 having substantially flat upper and lower surfaces 35, 37 and a sidewall 39 with a protrusion 36 generally extending therefrom. The protrusion 36 may generally be engaged within the central recess 20 of the first carrier 12. In the present example, the second carrier 14 also includes an arcuate portion 33 generally extending therefrom. This arcuate portion 33 is sized to seat within an arcuate recess 41 in the first carrier 12, as best shown in Figure 1.
This engagement may be achieved in a variety of ways. One example could be overmolding the first carrier 12 onto the second carrier 14. To further increase the strength of the engagement, the second carrier 14 could include a series of mechanical holes (not shown) therethrough, particularly in the protrusion 36. During overmolding, this would allow the plastic forming the first carrier 12 to flow through the holes in the second carrier and mechanically lock the first and second carriers 12, 14 to one another.

Alternatively, the engagement between the first and second carriers 12, 14 could be achieved through an interference fit. This would involve making the portion of the apertures 18 housing the second carrier 14 smaller than the second carrier 14. Once the first and second carriers 12, 14 are assembled, the interference from the press fit would hold the parts in place. The second carrier 14 could further include serrated edges (not shown) on an exterior surface. These serrated edges could cut into the first carrier 12 if a stiffer material were used for the second carrier 14.

An additional engagement could be achieved through the use of an adhesive. An adhesive could be applied to one or both parts to bond them together.

The second carrier may be formed from a variety of materials ranging from polymers to metals to ceramics. The present example shows the second carrier 14 formed from a metal. Forming the second carrier 14 from a material that is stiffer than the material of the first carrier 12 allows the second carrier 14 to serve as a load limiter as well.

The sealing member 16 may be disposed along an inner perimeter of the second carrier 14, having an outer perimeter generally conforming to the inner perimeter of the second carrier 14. Referring to Figure 3, the sealing member 16 has an outer edge 40, an inner edge 42, an upper portion 44, and a lower portion 46. The outer edge 40 generally abuts the inner perimeter of the second carrier 14 and is substantially flat in the present example. However, it should be understood that the outer edge 40 may include an interlocking feature adapted to engage an interlocking feature similar to the one described above regarding the interface between the first and second carriers 12, 14. The inner edge 42 of the sealing member 16 has a generally arcuate shape in the present example. However, it should be noted that the inner edge 42 could have any shape adapted to conform to an opening in a sealing surface.

The upper and lower portions 44, 46 each have a protrusion 48, 50 generally extending therefrom. These protrusions 48, 50 generally extend above the upper and lower surfaces 17, 19, 35, 37 of the first and second carriers 12, 14.

In the present example, the sealing member 16 includes a protrusion 52 sized to fit within the arcuate portion 33 of the second carrier 14, as best shown in Figure 2.

The sealing member 16 may be coupled to the second carrier 14 in a variety of ways. For example, the sealing member 16 may be bonded to the second carrier 14. Specifically, the second carrier 14 may be dipped in an adhesive and then placed in the hot rubber mold, where an elastomer used to form the sealing member 16 is chemically attached (bonded) to the second carrier 14. In some cases, the two materials (second carrier 14 and sealing member 16) may develop polar bonds and no adhesive may be necessary. Alternatively, as previously mentioned regarding the first and second carriers 14, 16, holes could be formed in the second carrier 14 and the sealing member material could flow into the holes, providing a mechanical lock between the second carrier 14 and the sealing member 16. The sealing member 16 could be formed from a variety of materials. Specifically a polymer could be used such as PTFE.

The disclosure provided above could be applied to a variety of areas. Specifically, as shown in Figure 1, the gasket assembly 10 could be used for a lower intake gasket for an internal combustion engine. Alternative uses may include any intake gaskets, such as lower intake gaskets, upper intake gaskets, throttle body gaskets, mass air flow sensor gaskets, and exhaust gas return gaskets. Other examples of applications specific to engines include oil pan gaskets, front cover gaskets, lifter oil manifold gaskets, rear cover gaskets, and cam phaser gaskets. The invention could also be used for general industrial purposes such as boiler gaskets, steam/pressure vessel gaskets, water gaskets, oil field gaskets, cover gaskets for use in applications including motorcycles and small engines, and aerospace applications.

The design of the present invention allows the use of a polymer main carrier to reduce the overall cost of the assembly, or to overcome technical challenges such as tolerance stack issues, bonding issues, or metal stamping issues. The use of an interior metal carrier allows the elastomer seal to bond easily thereto and also act as a built-in compression limiter for the sealing bead.

The description of the invention is merely exemplary in nature and, thus, variations that do not depart from the gist of the invention are intended to be within the scope of the invention. In particular, specific applications may require the use of different materials and configurations that are specifically disclosed. Such variations are not to be regarded as a departure from the spirit and scope of the invention.

## Claims

1. A gasket comprising a first carrier (12) having a body including a first aperture (18) defined therein, a second carrier (14) disposed along at least a portion of an inner perimeter (22) of said first aperture (18) and including a second aperture therein and a sealing member (16) disposed along at least a portion of an inner perimeter of said second aperture in said second carrier (14).

2. The gasket of claim 1, wherein said first carrier (12) is formed from a non-metallic material.

3. The gasket of claim 1 or 2, wherein said first carrier (12) is formed from a polymer.

4. The gasket of one of the claims 1 to 3, wherein said sealing member (16) is disposed along the entirety of said inner perimeter of said second aperture in said second carrier (14).

5. The gasket of one of the claims 1 to 4, wherein said second carrier (14) is disposed along the entirety of said inner perimeter of said first aperture (18).

6. The gasket of one of the claims 1 to 5, wherein said first carrier (12) includes a first locating feature (32).

7. The gasket of claim 6, wherein said first locating feature (32) is integrally formed on said first carrier (12).

8. The gasket of claim 6 or 7, wherein said first locating feature (32) includes a protrusion adapted to engage a second locating feature on a sealing surface.

9. The gasket of one of the claims 1 to 8, wherein said second carrier (14) is formed from a metallic material.

10. The gasket of one of the claims 1 to 9, wherein said first (12) and second (14) carriers are mechanically coupled to one another.

11. The gasket of one of the claims 1 to 10, wherein said first (12) and second (14) carriers are coupled to one another with an adhesive.

12. The gasket of one of the claims 1 to 11, wherein said sealing member (16) is bonded to said second carrier (14).

13. The gasket of one of the claims 1 to 11, wherein said sealing member (16) is formed on said second carrier (14).

14. The gasket of one of the claims 1, 2 or 4 to 13, wherein said first carrier (12) is formed from a ceramic material.

15. The gasket of one of the claims 1 to 8 or 10 to 14, wherein said second carrier (14) is formed from a polymer.

16. The gasket of one of the claims 1 to 8 or 10 to 14, wherein said second carrier (14) is formed from a ceramic material.

17. The gasket of one of the claims 1 to 16, wherein said second carrier (14) has a stiffness which is greater than a stiffness of said first carrier (12).

18. The gasket of one of the claims 1 to 17, wherein said second carrier (14) is adapted to be a load limiter.

19. The gasket of the claims 1 to 18, wherein said first carrier (12) is formed on said second carrier (14).
